# EUROPÄISCHE PATENTSCHRIFT

(11) **EP 2 438 460 B1**
(45) Veröffentlichungstag und Bekanntmachung des Hinweises auf die Patenterteilung: **10.04.2019**
(21) Anmeldenummer: 10725025.0
(22) Anmeldetag: 01.06.2010
(51) Int. Cl.: G01S 7/40, G01S 13/87, G01S 13/44, G01S 13/93, G01S 13/46, G01S 13/48, G01S 13/58, G01S 5/02, G01S 5/14

(54) **FAHRERASSISTENZEINRICHTUNG UND VERFAHREN ZUM KORRIGIEREN EINER ZIELWINKEL-PARAMETER-KENNLINIE**
DRIVER ASSISTANCE DEVICE AND METHOD FOR CORRECTING A TARGET ANGLE PARAMETER CHARACTERISTIC CURVE
DISPOSITIF D'ASSISTANCE DE CONDUCTEUR ET PROCÉDÉ POUR CORRIGER UNE COURBE CARACTÉRISTIQUE ANGLE CIBLE - PARAMÈTRE

(30) Priorität: 05.06.2009 DE 102009024064
(43) Veröffentlichungstag der Anmeldung: 11.04.2012
(73) Patentinhaber: Valeo Schalter und Sensoren GmbH, 74321 Bietigheim-Bissingen (DE)
(72) Erfinder: LUEBBERT, Urs, 74321 Bietigheim-Bissingen (DE); HABERLAND, Udo, 71088 Holzgerlingen (DE); GOERNER, Stefan, 74321 Bietigheim-Bissingen (DE)
(86) Internationale Anmeldenummer: PCT/EP2010/003303
(87) Internationale Veröffentlichungsnummer: WO 2010/139446

(56) Entgegenhaltungen:
- WO-A1-2005/054895
- WO-A2-03/031228
- DE-A1- 10 241 456
- DE-A1-102005 015 259

## Beschreibung

Die Erfindung betrifft eine Fahrerassistenzeinrichtung zum Bestimmen eines Zielwinkels eines einrichtungsexternen Objektes. Der Zielwinkel ist ein Winkel zwischen einer Referenzlinie, die durch ein Radargerät der Fahrerassistenzeinrichtung verläuft, und einer Verbindungslinie, die durch das Radargerät und das Objekt verläuft. Das Radargerät umfasst zumindest eine Empfangsantenneneinheit zum Empfangen von Signalen. Die Fahrerassistenzeinrichtung umfasst auch eine Steuereinrichtung, die abhängig von einem auf die empfangenen Signale bezogenen Parameter einen Wert für den Zielwinkel gemäß einer abgelegten Zielwinkel-Parameter-Kennlinie und einen Wert für eine Entfernung des Objektes von dem Radargerät bestimmt. Die Fahrerassistenzeinrichtung umfasst außerdem einen zu dem Radargerät beabstandet angeordneten Sensor zum Messen einer Entfernung des Objektes von selbigem Sensor. Die Erfindung bezieht sich auch auf ein Kraftfahrzeug mit einer solchen Fahrerassistenzeinrichtung sowie auf ein Verfahren zum Korrigieren einer in einer Steuereinrichtung einer Fahrerassistenzeinrichtung abgelegten Zielwinkel-Parameter-Kennlinie.

Vorliegend gilt das Interesse insbesondere der Phasenmonopols-Messung mithilfe eines Radargeräts. Dieses Verfahren dient zum Bestimmen des Zielwinkels eines Objektes und stellt in der Radartechnik eine bekannte Methode dar. Zur Bestimmung des Zielwinkels bedarf es zumindest zweier Empfangsantenneneinheiten, welche zwei Empfangsantennen oder zwei Empfangsantennengruppen (Arrays) sein können. Die durch die Empfangsantenneneinheiten empfangenen Signale werden in zwei separaten Empfangskanälen aufbereitet und als digitale Signale mithilfe einer Steuereinrichtung verarbeitet. Der Zielwinkel wird abhängig von der Phasenverschiebung zwischen den empfangenen Signalen bestimmt. Es wird zu diesem Zwecke der Zusammenhang des Zielwinkels und der Phasendifferenz zwischen den Phasen der empfangenen Signale in der Steuereinrichtung modelliert, nämlich durch eine Zielwinkel-Phasendifferenz-Kennlinie (auch unter der Bezeichnung Phasenmonopolscharakteristik bekannt).

Für Fahrerassistenzeinrichtungen werden solche Radargeräte in der Regel hinter einem Stoßfänger des Kraftfahrzeugs verbaut. Einbautoleranzen, hochfrequente Eigenschaften und die Form des Stoßfängers beeinflussen dabei die Richtcharakteristik der Antennen und verfälschen hierdurch die Zielwinkel-Phasendifferenz-Kennlinie. Außerdem kann sich die Kennlinie über die Lebensdauer des Kraftfahrzeugs verändern, nämlich beispielsweise aufgrund einer Deformation des Stoßfängers, der Ablagerung von Schmutz oder auch aufgrund der Alterung von Bauteilen. Es besteht somit eine besondere Herausforderung darin, systematische Fehler - also zum Beispiel solche, die durch Einbautoleranzen oder auch durch Alterung der Bauteile verursacht werden - bei der Phasenmonopols-Messung zu korrigieren.

DE10241456A1 offenbart eine Objektwinkel-Konsistenzprüfung zwischen 2 Kfz-Radarsensoren via Triangulation.

WO03/031228A2 offenbart eine Abstands/Winkel-Konsistenzprüfung indem die einzelnen Abstandsdaten ein- und desselben Objekts aufgenommen von 2 oder 3 Kfz-(Radar)sensoren gewichtet gemittelt werden (in dem jeweiligen Abstandsbereich zuverlässigere Sensoren werden höher gewichtet) und dieses gewichtete Mittel als Plausibilitätsreferenz dient.

Es ist Aufgabe der Erfindung, eine Lösung aufzuzeigen, wie der Zielwinkel eines Objektes besonders präzise bestimmt werden kann.

Diese Aufgabe wird erfindungsgemäß durch eine Fahrerassistenzeinrichtung mit den Merkmalen gemäß Patentanspruch 1, durch ein Kraftfahrzeug mit den Merkmalen des Patentanspruchs 7 sowie durch ein Verfahren mit den Merkmalen gemäß Patentanspruch 8 gelöst. Vorteilhafte Ausführungen der Erfindung sind Gegenstand der abhängigen Ansprüche.

Eine erfindungsgemäße Fahrerassistenzeinrichtung ist zum Bestimmen eines Zielwinkels eines einrichtungsexternen, d.h. eines extern und beabstandet zur Fahrerassistenzeinrichtung angeordneten, Objektes ausgebildet, wobei der Zielwinkel ein Winkel zwischen einer durch ein Radargerät der Fahrerassistenzeinrichtung verlaufenden Referenzlinie und einer durch das Radargerät und das Objekt verlaufenden Verbindungslinie ist. Das Radargerät umfasst zumindest eine Empfangsantenneneinheit zum Empfang von Signalen. Eine Steuereinrichtung der Fahrerassistenzeinrichtung ist dazu ausgelegt, abhängig von einem auf die empfangenen Signale bezogenen Parameter einen Wert für den Zielwinkel gemäß einer abgelegten Zielwinkel-Parameter-Kennlinie und einen Wert für eine Entfernung des Objektes von dem Radargerät zu bestimmen. Die Fahrerassistenzeinrichtung umfasst ferner einen zu dem Radargerät beabstandet angeordneten Sensor zum Messen einer Entfernung des Objektes von selbigem Sensor. Die Steuereinrichtung ist dazu ausgelegt, aus Messwerten der Entfernung des Objektes von dem Sensor und den Werten für die Entfernung des Objektes von dem Radargerät den Zielwinkel nach einem Rechenverfahren zu berechnen und die abgelegte Zielwinkel-Parameter-Kennlinie abhängig vom Ergebnis dieser Berechnung zu korrigieren.

Demnach wird der erfindungsgemäße Effekt dadurch erzielt, dass der Zielwinkel auch aus der jeweiligen Entfernung des Objektes von dem Radargeräts und dem Sensor - also unabhängig von der Zielwinkel-Parameter-Kennlinie - berechnet wird und die Steuereinrichtung die Zielwinkel-Parameter-Kennlinie abhängig von diesem berechneten Zielwinkel korrigieren kann. Auf diesem Wege gelingt es, die Zielwinkel-Parameter-Kennlinie auch während des Betriebs der Fahrerassistenzeinrichtung bzw. des Fahrerassistenzsystems und somit auch beispielsweise während der Fahrt automatisch zu kalibrieren. Durch die Alterung der Bauteile sowie durch Einbautoleranzen bedingte systematische Fehler können somit korrigiert werden, und es wird eine präzise Bestimmung des Zielwinkels gewährleistet.

Die Erfindung beruht auf der Erkenntnis, dass die Bestimmung des Zielwinkels mithilfe der Zielwinkel-Parameter-Kennlinie eine geringe Varianz bzw. geringes Messrauschen aufweist, jedoch mit einem systematischen Fehler behaftet ist, nämlich aufgrund der Alterung der Bauteile oder auch aufgrund der Einbautoleranzen. Demgegenüber weisen die abhängig von der Entfernung berechneten Zielwinkelwerte eine hohe Varianz auf, können jedoch als erwartungstreu angesehen werden. Der Fehler des nach dem Rechenverfahren berechneten Zielwinkels ist somit ein zufälliger Fehler - bedingt durch die Genauigkeit der Entfernungsmessung - und kein systematischer Fehler. Dieser Fehler kann näherungsweise als mittelwertfrei angesehen werden. Es ist somit möglich, mithilfe einer Filterung - beispielsweise einer Mittelung - der nach dem Rechenverfahren berechneten Werten für den Zielwinkel über eine bestimmte Zeit sehr präzise Messwerte zu erreichen und die Zielwinkel-Parameter-Kennlinie zu korrigieren.

Unter der Empfangsantenneneinheit wird vorliegend eine einzelne Empfangsantenne oder eine Gruppe von miteinander gekoppelten und gemeinsam gespeisten Empfangsantennen (Array) verstanden. Einer einzelnen Empfangsantenneneinheit kann also ein Empfangskanal zugeordnet werden; die durch die Empfangsantenneneinheit empfangenen Signale werden dann in dem Empfangskanal aufbereitet. Verfügt das Radargerät über nur eine einzige Empfangsantenneneinheit, so werden bevorzugt zumindest zwei Sendeantenneneinheiten - zumindest zwei einzelne Sendeantennen oder zumindest zwei Gruppen von Sendeantennen (Arrays) - eingesetzt. So kann der Zielwinkel mithilfe des Radars bestimmt werden, nämlich durch Auswertung der empfangenen Signale, die durch zwei unabhängige Sendeantenneneinheiten gesendet werden.

Es hat sich jedoch als besonders vorteilhaft herausgestellt, wenn das Radargerät zumindest zwei Empfangsantenneneinheiten umfasst. Dann kann für jede Empfangsantenneneinheit jeweils ein separater Empfangskanal vorgesehen sein, in welchem die durch die zugeordnete Empfangsantenneneinheit empfangenen Signale aufbereitet werden. Für die Bestimmung des Zielwinkels stehen dann Signale in zwei unabhängigen Empfangskanälen zur Verfügung, und es kann das Phasen-Monopuls-Verfahren oder auch das Amplituden-Monopuls-Verfahren zur Bestimmung des Zielwinkels verwendet werden. Dann ist die Zielwinkel-Parameter-Kennlinie eine Zielwinkel-Phasenverschiebung-Kennlinie oder eine Zielwinkel-Amplitudendifferenz-Kennlinie. Das Radargerät kann in dieser Ausführungsform mit lediglich einer Sendeantenneneinheit auskommen.

Bei dem Rechenverfahren handelt es sich insbesondere um das Trilaterationsverfahren. Mit diesem Verfahren kann die relative Position eines Objektes bezüglich eines bestimmten Punkts der Fahrerassistenzeinrichtung bzw. die Position des Objektes in einem zur Fahrerassistenzeinrichtung definierten Koordinatensystem bestimmt werden, vorausgesetzt, dass die Entfernung des Objektes zum Radargerät sowie die Entfernung zum Sensor bekannt sind. Ist die relative Position des Objektes bezüglich der Fahrerassistenzeinrichtung bzw. die Position des Objektes in dem Koordinatensystem bekannt, so kann auch der Zielwinkel bezüglich der Referenzlinie bestimmt werden. Also müssen lediglich die Entfernungen des Objektes vom Radargerät sowie vom Sensor gemessen werden, und der Zielwinkel kann durch einfache Rechnung nach dem Trilaterationsverfahren bestimmt werden.

Es kann zumindest ein nach dem Rechenverfahren berechneter Wert für den Zielwinkel einem spezifischen Wert des Zielwinkels in der Zielwinkel-Parameter-Kennlinie zugeordnet werden, und der Wert des Zielwinkels der Zielwinkel-Parameter-Kennlinie kann abhängig von diesem zumindest einen zugeordneten Wert korrigiert werden. Diese Zuordnung kann zum Beispiel so gestaltet werden, dass für eine bestimmte Position eines Objektes bei einer einzelnen Messung der Zielwinkel mithilfe der Zielwinkel-Parameter-Kennlinie sowie gleichzeitig nach dem Rechenverfahren abhängig von der Entfernung bestimmt wird. Der nach dem Rechenverfahren berechnete Wert für den Zielwinkel kann dann dem Wert des Zielwinkels in der Zielwinkel-Parameter-Kennlinie zugeordnet werden, und der Wert des Zielwinkels in der Zielwinkel-Parameter-Kennlinie kann abhängig von dem nach dem Rechenverfahren berechneten zugeordneten Wert korrigiert werden. Es hat sich als besonders vorteilhaft herausgestellt, wenn einem bestimmten Wert des Zielwinkels in der Zielwinkel-Parameter-Kennlinie eine Vielzahl von nach dem Rechenverfahren berechneten Werten - zum Beispiel tausend Werte - zugeordnet werden. Dies kann zum Beispiel durch eine Vielzahl von einzelnen Messungen an unterschiedlichen Objekten erzielt werden. Dann stehen für einen bestimmten Wert des Zielwinkels in der Zielwinkel-Parameter-Kennlinie eine Vielzahl von nach dem Rechenverfahren berechneten Werten zur Verfügung, und der Wert des Zielwinkels in der Zielwinkel-Parameter-Kennlinie kann präzise korrigiert werden. Dies beruht - wie bereits ausgeführt - auf der Erkenntnis, dass die nach dem Rechenverfahren berechneten Werte für den Zielwinkel eine hohe Varianz bzw. ein hohes Messrauschen aufweisen, jedoch mit keinem systematischen Fehler behaftet und somit erwartungstreu sind. Zum Beispiel können die Vielzahl von nach dem Rechenverfahren berechneten Werten gemittelt werden, und der Wert des Zielwinkels in der Zielwinkel-Parameter-Kennlinie kann abhängig von dem gemittelten Wert korrigiert werden.

Die Zuordnung einer Vielzahl von nach dem Rechenverfahren berechneten Werten zu einem einzelnen bestimmten Wert des Zielwinkels in der Zielwinkel-Parameter-Kennlinie kann zum Beispiel in einem solchen Szenario umgesetzt werden: Ein Kraftfahrzeug mit der Fahrerassistenzeinrichtung fährt durch ein Stadtgebiet. Den Erfassungsbereich des Radargeräts durchquert zunächst ein erstes Objekt, zum Beispiel ein weiteres Kraftfahrzeug oder ein Fahrrad. Während dieser Durchquerung bestimmt die Steuereinrichtung kontinuierlich den Zielwinkel mithilfe der abgelegten Zielwinkel-Parameter-Kennlinie. Gleichzeitig messen das Radargerät und der Sensor die jeweilige Entfernung des Objektes von dem Radargerät respektive dem Sensor. Die Steuereinrichtung berechnet - während der Durchquerung des Objekts durch den Erfassungsbereich des Radargeräts - kontinuierlich den Zielwinkel nach dem Trilaterationsverfahren. Zu einem bestimmten Zeitpunkt bzw. zu einer bestimmten Position des Objektes relativ zum Kraftfahrzeug stehen somit zwei Werte für den Zielwinkel zur Verfügung, nämlich einerseits der mithilfe der Zielwinkel-Parameter-Kennlinie bestimmte Wert und andererseits der nach dem Trilaterationsverfahren berechnete Wert. Durchquert das Objekt den gesamten Erfassungsbereich, so gilt dies entsprechend für eine Vielzahl von Positionen des Objektes im Erfassungsbereich und somit für eine Vielzahl von Werten des Zielwinkels in der Zielwinkel-Parameter-Kennlinie. Der nach dem Trilaterationsverfahren berechnete Wert wird dem mithilfe der Kennlinie bestimmten Wert zugeordnet und zur Korrektur der Kennlinie verwendet. Durchqueren weitere Objekte den Erfassungsbereich des Radargeräts, so werden weitere nach dem Trilaterationsverfahren berechnete Werte einem einzelnen Zielwinkelwert in der Zielwinkel-Parameter-Kennlinie zugeordnet. Durch Ortung einer Vielzahl von Objekten kann für eine konkrete Position relativ zum Kraftfahrzeug eine entsprechende Vielzahl von nach dem Rechenverfahren berechneten Werten für den Zielwinkel gewonnen und einem einzelnen Zielwinkelwert in der Zielwinkel-Parameter-Kennlinie zugeordnet werden.

Zur Korrektur eines Werts des Zielwinkels in der Zielwinkel-Parameter-Kennlinie kann eine Differenz aus diesem Wert und dem nach dem Rechenverfahren berechneten zugeordneten Wert als Korrekturwert berechnet werden. Dann kann der Wert des Zielwinkels in der Zielwinkel-Parameter-Kennlinie abhängig von dem Korrekturwert korrigiert werden. Durch Berechnung des Korrekturwerts kann die Abweichung des Zielwinkels in der Zielwinkel-Parameter-Kennlinie geschätzt werden. So lässt sich die Zielwinkel-Parameter-Kennlinie präzise und ohne viel Aufwand korrigieren.

Eine solche Schätzung der Abweichung des Zielwinkels in der Zielwinkel-Parameter-Kennlinie kann aufgrund der eingeschränkten Genauigkeit der Entfernungsmessung relativ stark verrauscht sein. Da jedoch die Korrekturwerte trotz ihrer hohen Varianz erwartungstreu sind, kann durch eine Mittelung der Korrekturwerte eine präzise Schätzung der Abweichung des Zielwinkels in der Zielwinkel-Parameter-Kennlinie gewährleistet werden. Es ist deshalb in einer Ausführungsform vorgesehen, dass die Steuereinrichtung aus einer vorbestimmten Anzahl von nach dem Rechenverfahren berechneten und einem bestimmten Wert des Zielwinkels in der Zielwinkel-Parameter-Kennlinie zugeordneten Werten eine entsprechende Anzahl von Korrekturwerten berechnet und den Wert des Zielwinkels in der Zielwinkel-Parameter-Kennlinie abhängig von den Korrekturwerten korrigiert. Es gilt dabei die Beziehung, dass je größer die Anzahl von Korrekturwerten ist, desto genauer die Schätzung der Abweichung des Zielwinkels in der Zielwinkel-Parameter-Kennlinie und somit genauer die Korrektur dieser Kennlinie ist.

In einer Ausführungsform ist vorgesehen, dass die Steuereinrichtung die Korrekturwerte filtert und den Wert des Zielwinkels in der Zielwinkel-Parameter-Kennlinie abhängig vom Ergebnis der Filterung korrigiert. Durch eine Filterung der Korrekturwerte gelingt es, die Abweichung des Zielwinkels in der Zielwinkel-Parameter-Kennlinie präzise zu schätzen.

Bei der Filterung kann insbesondere ein Mittelwert aus einer vorbestimmten Anzahl von Korrekturwerten berechnet werden, und der Wert des Zielwinkels in der Zielwinkel-Parameter-Kennlinie kann um diesen Mittelwert korrigiert werden. Bei der Mittelung der Korrekturwerte sind zumindest zwei Ausführungsformen sinnvoll möglich. Die Steuereinrichtung kann zu dem bestimmten Wert des Zielwinkels in der Zielwinkel-Parameter-Kennlinie jeweils eine vorbestimmte Anzahl von Korrekturwerten aufsammeln, aus diesen Korrekturwerten einen Mittelwert berechnen und den Wert des Zielwinkels in der Zielwinkel-Parameter-Kennlinie um den Mittelwert korrigieren. Zum Beispiel können zunächst jeweils tausend Korrekturwerte aufgesammelt werden, und aus diesen tausend Korrekturwerten kann ein Mittelwert berechnet werden. Der Mittelwert wird also erst dann berechnet, wenn jeweils alle Korrekturwerte aufgesammelt wurden. Diese Ausführungsform bietet eine genaue Kalibrierung der Zielwinkel-Parameter-Kennlinie ohne viel Aufwand; die Korrekturwerte müssten lediglich gespeichert, einmal gemittelt und auf die Zielwinkel-Parameter-Kennlinie angewandt werden.

In einer alternativen Ausführungsform ist vorgesehen, dass die Steuereinrichtung zu dem bestimmten Wert des Zielwinkels in der Zielwinkel-Parameter-Kennlinie ein gleitendes Mittel aus jeweils einer vorbestimmten Anzahl von Korrekturwerten berechnet und den Wert des Zielwinkels in der Zielwinkel-Parameter-Kennlinie um den jeweils aktuellen Mittelwert des gleitenden Mittels kontinuierlich korrigiert. Bei dieser Ausführungsform wird die Zielwinkel-Parameter-Kennlinie mit einem jeden berechneten Korrekturwert nachkalibriert. Bei dem gleitenden Mittel handelt es sich um eine unendliche Reihe von Mittelwerten, die jeweils aus einer vorbestimmten Anzahl von Korrekturwerten berechnet werden. Wird ein neuer Korrekturwert berechnet, so wird unmittelbar ein neuer Mittelwert aus der vorbestimmten Anzahl von Korrekturwerten berechnet. Zu diesem Zwecke kann beispielsweise ein rekursiver Filter verwendet werden, das heißt ein solcher Filter, welcher eine unendliche Impulsantwort aufweist.

Dies kann zum Beispiel in einem solchen Ablauf umgesetzt werden: Das Radargerät ist in einem linken Eckbereich eines hinteren Stoßfängers eines Kraftfahrzeugs angeordnet, der Sensor im Bereich der rechten Ecke desselben Stoßfängers. Die Erfassungsbereiche des Radargeräts und des Sensors überschneiden sich, der Überlappungsbereich beträgt zum Beispiel 70°. Dies bedeutet, dass Ziele, die sich bezüglich der Fahrzeuglängsachse in einem Winkelbereich zwischen -35° und +35° befinden, sowohl durch das Radargerät als auch durch den Sensor erfasst werden können. Durchquert ein erstes Objekt den Erfassungsbereich des Radargeräts, bestimmt die Steuereinrichtung unmittelbar den Zielwinkel, nämlich mithilfe der abgelegten Zielwinkel-Parameter-Kennlinie. Gleichzeitig - wenn sich das Objekt in dem Überlappungsbereich befindet - messen sowohl das Radargerät als auch der Sensor die jeweilige Entfernung des Objektes zu dem Radargerät respektive dem Sensor. Aus den Messwerten der Entfernung berechnet die Steuereinrichtung nach dem Trilaterationsverfahren den Zielwinkel. Dieser berechnete Wert für den Zielwinkel wird dem mithilfe der Zielwinkel-Parameter-Kennlinie zum selben Zeitpunkt bzw. bei derselben Messung bestimmten Wert zugeordnet, und es wird eine Differenz aus dem Wert des Zielwinkels in der Kennlinie und dem berechneten Wert berechnet. Diese Differenz wird als Korrekturwert einem rekursiven Filter zugeführt, welcher einen aktuellen arithmetischen Mittelwert aus diesem Korrekturwert sowie weiteren zuvor berechneten Korrekturwerten berechnet. Um diesen neu berechneten Mittelwert korrigiert die Steuereinrichtung den Wert des Zielwinkels in der Zielwinkel-Parameter-Kennlinie. Erfasst das Radargerät ein weiteres Objekt, so kann ein neuer Korrekturwert demselben Zielwinkelwert in der Zielwinkel-Parameter-Kennlinie zugeordnet werden, und die Steuereinrichtung berechnet einen neuen Mittelwert aus diesem Korrekturwert und zuvor aufgesammelten Korrekturwerten. So wird die Zielwinkel-Parameter-Kennlinie mit einem jeden Korrekturwert um den jeweils aktuellen Mittelwert korrigiert. Durchquert ein Objekt den gesamten Überlappungsbereich des Radars und des Sensors, kann zu einem jeden Wert des Zielwinkels in der Zielwinkel-Parameter-Kennlinie jeweils ein Korrekturwert berechnet werden, und es kann die gesamte Zielwinkel-Parameter-Kennlinie im Überlappungsbereich korrigiert werden.

Wie oben ausgeführt, kann die Zielwinkel-Parameter-Kennlinie unmittelbar nur in einem solchen Wertebereich korrigiert werden, welcher dem Überlappungsbereich der jeweiligen Erfassungsbereiche des Radargeräts und des Sensors entspricht. Der Rest der Zielwinkel-Parameter-Kennlinie kann zum Beispiel durch eine Interpolation nachkorrigiert werden. Also kann die Steuereinrichtung dazu ausgelegt sein, einem jeden Wert des Zielwinkels innerhalb eines Überlappungsbereichs der Zielwinkel-Parameter-Kennlinie, in welchem der Zielwinkel nach dem Rechenverfahren berechenbar ist, jeweils zumindest einen nach dem Rechenverfahren berechneten Wert für den Zielwinkel zuzuordnen und den jeweiligen Wert des Zielwinkels in der Zielwinkel-Parameter-Kennlinie abhängig von dem zumindest einen zugeordneten Wert zu korrigieren.

Die oben beschriebene Vorgehensweise bei der Korrektur der Zielwinkel-Parameter-Kennlinie bezieht sich auf den Zielwinkel bei einem vorgegebenen Wert des Parameters, zum Beispiel bei einer vorgegebenen Phasenverschiebung zwischen den empfangenen Signalen zweier Empfangsantenneneinheiten. Es ist jedoch selbstverständlich, dass auch die Werte des Parameters bei jeweils einem vorgegebenen Wert des Zielwinkels korrigiert werden können. Dies kann zum Beispiel so gestaltet werden, dass aus dem nach dem Rechenverfahren berechneten Zielwinkel der Parameterwert berechnet wird, nämlich beispielsweise unter Berücksichtigung einer Steigung der Kennlinie im Bereich des berechneten Werts des Zielwinkels. Zu einem bestimmten Wert des Parameters in der Zielwinkel-Parameter-Kennlinie können somit eine Vielzahl von Korrekturwerten berechnet werden, und dieser Wert des Parameters kann dann abhängig von den Korrekturwerten korrigiert werden. Diese Vorgehensweise führt zu demselben Ergebnis, wie die Korrektur der Werte des Zielwinkels.

Es wird bevorzugt ein Dauerstrichradar als Radargerät verwendet, welcher zum Abstrahlen einer frequenzmodulierten kontinuierlichen elektromagnetischen Welle ausgebildet ist (auch unter der Bezeichnung FMCW(frequency modulated continuous wave)-Radar bekannt). Mit einem solchen Radargerät gelingt es, die Entfernung eines Objektes von selbigem Radargerät zu bestimmen, wie auch die relative Geschwindigkeit des Objektes bezüglich des Radargeräts sowie den Zielwinkel. Das Radargerät kann einen Empfänger umfassen, mit welchem die zumindest eine Empfangsantenneneinheit gekoppelt sind. Ein solcher Empfänger kann zum Beispiel einen Mischer, einen Tiefpassfilter, einen Verstärker sowie einen Analog-Digital-Wandler umfassen. Die durch die zumindest eine Empfangsantenneneinheit empfangenen Signale werden dann im Empfänger in das Basisband herabgemischt, tiefpass-gefiltert und analog-digital-gewandelt.

Umfasst das Radargerät zumindest zwei Empfangsantenneneinheiten, so kann der Empfänger für jede Empfangsantenneneinheit jeweils einen Mischer, einen Tiefpassfilter, einen Verstärker sowie einen Analog-Digital-Wandler umfassen. Die durch die Empfangsantenneneinheiten empfangenen Signale werden dann im Empfänger in das Basisband herabgemischt, tiefpass-gefiltert und analog-digital-gewandelt. Die Steuereinrichtung kann an den empfangenen Signalen die Fourier-Transformation, insbesondere die FFT (Fast Fourier Transformation) durchführen, die Phasen oder die Amplituden der empfangenen Signale detektieren und miteinander vergleichen.

Bei dem Radargerät wird bevorzugt eine separate Sendeantenneneinheit - sei diese eine einzelne Sendeantenne oder eine Sendeantennengruppe - verwendet, die mithilfe eines lokalen Oszillators zur Erzeugung eines Sendesignals gespeist wird. Das Sendesignal kann auch den jeweiligen Mischern im Empfänger zugeführt werden, um die empfangenen Signale in das Basisband herabzumischen. Die Sendeantenneneinheit kann phasengesteuert werden, um so insgesamt einen relativ breiten Umgebungsbereich mit einer schmalen Hauptkeule der Richtcharakteristik erfassen zu können.

Es ist bevorzugt eine Phasendifferenz zwischen den Phasen der empfangenen Signale, welche als Parameter in der Zielwinkel-Parameter-Kennlinie verwendet wird. Durch Auswertung der Phasendifferenz zwischen den Phasen der empfangenen Signale kann nämlich der Zielwinkel eines Objektes präzise und ohne viel Aufwand bestimmt werden. Es ist jedoch auch sinnvoll möglich, die Amplituden der empfangenen Signale als Parameter miteinander zu vergleichen und den Zielwinkel abhängig von der Differenz aus den Amplituden der beiden Signale zu bestimmen.

In einer Ausführungsform ist vorgesehen, dass der von dem Radargerät separate Sensor ebenfalls ein Radargerät ist. Es hat sich als besonders vorteilhaft herausgestellt, wenn der Sensor ein gleiches Radargerät ist. Die Fahrerassistenzeinrichtung umfasst dann zwei Radargeräte, die jeweils die Entfernung, die Geschwindigkeit sowie den Zielwinkel eines Objektes messen. Es kann auch für den separaten Sensor eine separate Zielwinkel-Parameter-Kennlinie in der Steuereinrichtung abgelegt sein. Dann kann die Steuereinrichtung dazu ausgelegt sein, diese Zielwinkel-Parameter-Kennlinie abhängig von dem nach dem Rechenverfahren berechneten Zielwinkel zu korrigieren. Also kann vorgesehen sein, dass die Steuereinrichtung zwei Zielwinkel-Parameter-Kennlinien, nämlich für beide Radargeräte, gleichzeitig korrigiert. Es ist jedoch auch sinnvoll möglich, eine gemeinsame Zielwinkel-Parameter-Kennlinie für beide Radargeräte zu verwenden.

Die Erfindung umfasst auch ein Kraftfahrzeug, welches eine erfindungsgemäße Fahrerassistenzeinrichtung oder eine bevorzugte Ausgestaltung derselben aufweist. Dabei gelten die mit Bezug auf die erfindungsgemäße Fahrerassistenzeinrichtung vorgestellten bevorzugten Ausführungsformen und deren Vorteile entsprechend für das erfindungsgemäße Kraftfahrzeug.

Bei dem Kraftfahrzeug kann vorgesehen sein, dass das Radargerät und der separate Sensor beabstandet zueinander in einem Heckbereich des Kraftfahrzeugs, insbesondere jeweils in einem Eckbereich, angeordnet sind. Dann können sowohl das Radargerät als auch der Sensor einen Bereich hinter dem Kraftfahrzeug sowie einen Bereich seitlich des Kraftfahrzeugs erfassen. Der Erfassungsbereich des Radargeräts überlappt sich bevorzugt mit dem Erfassungsbereich des Sensors, der Öffnungswinkel eines Überlappungsbereichs der beiden Erfassungsbereiche liegt bevorzugt in einem Winkelbereich von 40° bis 100° und beträgt beispielsweise 70°. Die Öffnungswinkel der jeweiligen Erfassungsbereiche des Radargeräts und des Sensors können zum Beispiel jeweils 170° betragen.

Bevorzugt wird die Zielwinkel-Parameter-Kennlinie während des Betriebes der Fahrerassistenzeinrichtung, insbesondere während der Fahrt des Kraftfahrzeugs korrigiert. Dies gilt insbesondere für die Ausführungsform, bei welcher die Zielwinkel-Parameter-Kennlinie mit einem jeden Korrekturwert kontinuierlich korrigiert wird. Werden die Korrekturwerte - wie oben ausgeführt - zunächst aufgesammelt, bevor die Zielwinkel-Parameter-Kennlinie tatsächlich korrigiert wird, so kann die Korrektur der Zielwinkel-Parameter-Kennlinie auch bei einem abgestellten Kraftfahrzeug durchgeführt werden. Werden die Korrekturwerte ausschließlich bei einem fahrenden Kraftfahrzeug gesammelt, können die Entfernungsmessfehler und somit die Korrekturwerte tatsächlich als mittelwertfrei angesehen werden, und die Abweichung der Zielwinkel-Parameter-Kennlinie kann präzise geschätzt werden.

Es sind unterschiedlichste Anwendungen der Fahrerassistenzeinrichtung in dem Kraftfahrzeug sinnvoll möglich. Zum Beispiel kann die Fahrerassistenzeinrichtung zur Spurwechselassistenz, zur Überwachung des toten Winkels, wie auch zur Unfallfrüherkennung dienen. Die Fahrerassistenzeinrichtung kann aber auch die Funktion einer automatischen Abstandswarnung, einer Abstandsregelung, einer Spurverlassenswarnung oder auch einer Einparkhilfe haben.

Ein erfindungsgemäßes Verfahren ist zum Korrigieren einer in einer Steuereinrichtung einer Fahrerassistenzeinrichtung abgelegten Zielwinkel-Parameter-Kennlinie ausgelegt, welche die Abhängigkeit eines Zielwinkels eines einrichtungsexternen Objektes und eines auf Empfangssignale zumindest einer Empfangsantenneneinheit eines einrichtungsinternen Radargeräts bezogenen Parameters wiedergibt. Der Zielwinkel ist ein Winkel zwischen einer durch das Radargerät verlaufenden Referenzlinie und einer durch das Radargerät und das Objekt verlaufenden Verbindungslinie. Bei dem Verfahren wird eine Entfernung des Objektes zu dem Radargerät gemessen. Es wird außerdem eine Entfernung des Objektes zu einem beabstandet zu dem Radargerät angeordneten Sensor gemessen. Aus diesen Messwerten wird der Zielwinkel nach einem Rechenverfahren berechnet, und die abgelegte Zielwinkel-Parameter-Kennlinie wird abhängig von dem Ergebnis dieser Berechnung korrigiert.

Die mit Bezug auf die erfindungsgemäße Fahrerassistenzeinrichtung sowie das erfindungsgemäße Kraftfahrzeug vorgestellten bevorzugten Ausführungsformen und deren Vorteile geltend entsprechend für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: in schematischer Darstellung eine Draufsicht auf ein Kraftfahrzeug mit einer Fahrerassistenzeinrichtung gemäß einer Ausführungsform der Erfindung;
- Fig. 2: in schematischer Darstellung ein Radargerät der Fahrerassistenzeinrichtung, welches mit einer Steuereinrichtung der Fahrerassistenzeinrichtung gekoppelt ist;
- Fig. 3: in schematischer Darstellung zwei Empfangsantenneneinheiten, anhand derer die Phasen-Monopols-Messung näher erläutert wird;
- Fig. 4: einen Abschnitt einer Zielwinkel-Parameter-Kennlinie, anhand deren ein Verfahren gemäß einer Ausführungsform der Erfindung näher erläutert wird; und
- Fig. 5: in schematischer Darstellung eine Verkehrsituation, anhand deren das Verfahren näher erläutert wird.

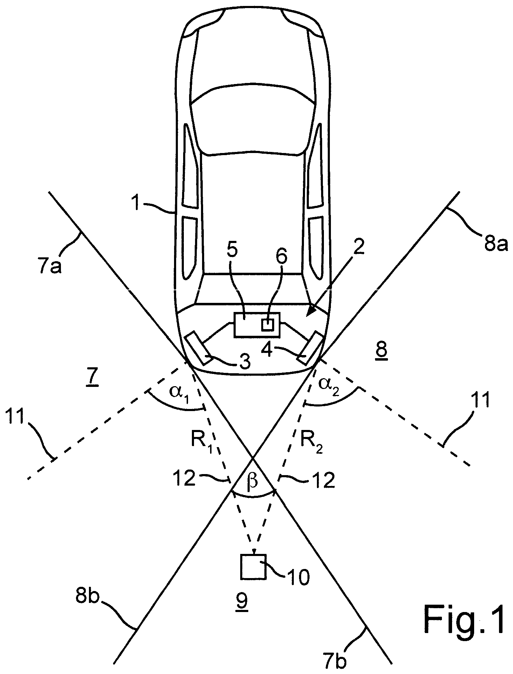

Ein in Fig. 1 dargestelltes Kraftfahrzeug 1 umfasst eine Fahrerassistenzeinrichtung 2, die den Fahrer beim Führen des Kraftfahrzeugs 1 unterstützt. Die Fahrerassistenzeinrichtung 2 kann beispielsweise ein Spurhaltesystem und/oder ein Unfallfrüherkennungssystem, insbesondere für Auffahrunfälle von hinten, und/oder ein ACC(Adaptive Cruise Control)-System sein. Die Fahrerassistenzeinrichtung 2 umfasst ein erstes Radargerät 3 sowie einen als zweites Radargerät ausgebildeten Sensor 4. Das erste Radargerät 3 ist in einer linken Ecke eines hinteren Stoßfängers und das zweite Radargerät 4 in einer rechten Ecke desselben Stoßfängers angeordnet. Das erste und das zweite Radargerät 3, 4 sind mit einer Steuereinrichtung 5 gekoppelt. Die Steuereinrichtung 5 kann zum Beispiel einen für das erste und das zweite Radargerät 3, 4 gemeinsamen Mikroprozessor 6 umfassen. Alternativ können zwei Mikroprozessoren 6 vorgesehen sein, die zum Beispiel über einen im Kraftfahrzeug 1 vorhandenen Kommunikationsbus miteinander kommunizieren.

Das erste Radargerät 3 weist einen Erfassungsbereich 7 auf, welcher durch zwei Linien 7a, 7b begrenzt ist. Der Öffnungswinkel des Erfassungsbereichs 7 - also der Winkel zwischen den Linien 7a, 7b - beträgt ca. 170°. Entsprechend weist das zweite Radargerät 4 einen Erfassungsbereich 8 auf, welcher durch zwei Linien 8a, 8b begrenzt ist. Der Öffnungswinkel des Erfassungsbereichs 8 - also der Winkel zwischen den Linien 8a, 8b - beträgt im Ausführungsbeispiel ebenfalls etwa 170°. Die Erfassungsbereiche 7, 8 der Radargeräte 3, 4 überschneiden sich, so dass ein Überlappungsbereich 9 gegeben ist. Der Überlappungsbereich 9 ist durch die Linien 7b, 8b winkelig begrenzt. Im Ausführungsbeispiel beträgt ein Öffnungswinkel β des Überlappungsbereichs 9 etwa 70°.

In ihren jeweiligen Erfassungsbereichen 7, 8 können die Radargeräte 3, 4 ein Objekt 10 orten. Insbesondere können die Radargeräte 3, 4 jeweils eine Entfernung R₁, R₂ des Objektes 10 von dem jeweiligen Radargerät 3, 4, jeweils einen Zielwinkel α₁, α₂ sowie eine relative Geschwindigkeit des Objektes 10 bezüglich des Kraftfahrzeugs 1 bestimmen. Die Zielwinkel α₁, α₂ sind Winkel zwischen jeweils einer Referenzlinie 11, die durch das entsprechende Radargerät 3, 4 verläuft, und einer Verbindungslinie 12, die durch das Objekt 10 und das jeweilige Radargerät 3, 4 verläuft.

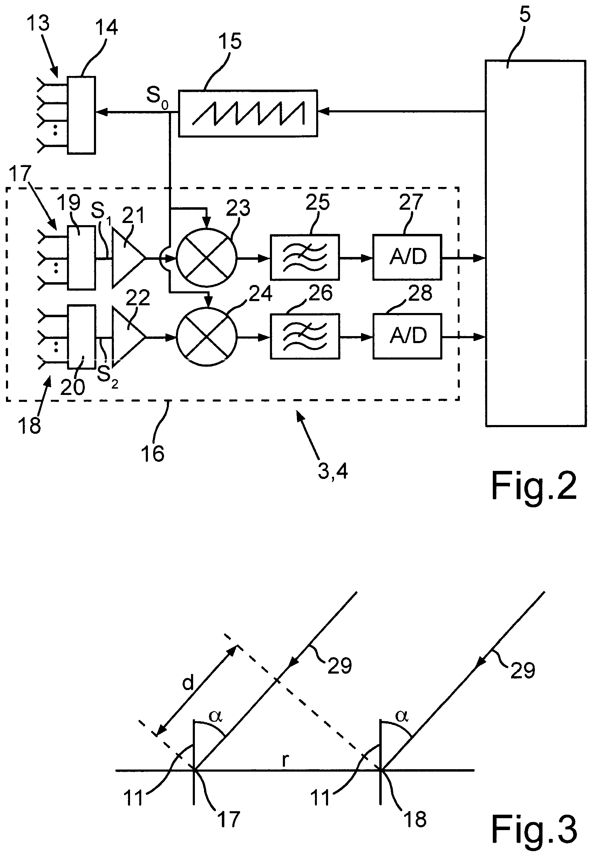

Die Radargeräte 3, 4 messen den jeweiligen Zielwinkel α₁, α₂ nach dem Phasen-Monopols-Verfahren. Bezugnehmend auf die Fig. 2 und 3 wird nun der Aufbau eines einzelnen Radargeräts 3, 4, wie auch die Bestimmung eines Zielwinkels α näher erläutert.

Fig. 2 zeigt ein Blockschaltbild eines einzelnen Radargeräts 3, 4 sowie die Steuereinrichtung 5. Das Radargerät 3, 4 umfasst eine Sendeantenneeinheit 13, die eine einzelne Antenne oder eine Antennengruppe (Array) sein kann, die über eine Speiseschaltung 14 gespeist wird. Die Sendeantenneneinheit 13 wird mithilfe eines lokalen Oszillators 15 gespeist, welcher ein Sendesignal S₀ erzeugt. Dieses Sendesignal S₀ ist eine frequenzmodulierte elektromagnetische Welle, deren Frequenz im Ausführungsbeispiel einen sägezahnförmigen Verlauf aufweist. Also ist das Sendesignal S₀ frequenzmoduliert; seine Frequenz verläuft periodisch zwischen einem ersten Wert von zum Beispiel 23,8 GHz und einem zweiten Wert von zum Beispiel 24,2 GHz. Die mittlere Frequenz des Sendesignals S₀ beträgt im Ausführungsbeispiel 24 GHz.

Der lokale Oszillator 15 wird durch die Steuereinrichtung 5 angesteuert. Der Oszillator 15 ist zum Beispiel ein spannungsgesteuerter Oszillator (Voltage Controlled Oscillator), welcher das Sendesignal S₀ mit einer solchen Frequenz erzeugt, die abhängig von der Amplitude einer von der Steuereinrichtung 5 an dem Oszillator 15 bereitgestellten Gleichspannung ist.

Das Radargerät 3, 4 umfasst außerdem einen Empfänger 16. Der Empfänger 16 umfasst zwei Empfangsantenneneinheiten 17, 18, die im Ausführungsbeispiel jeweils durch eine Reihe von Patch-Antennen gebildet sind. Die Empfangsantenneneinheiten 17, 18 sind jeweils mit einer Speiseschaltung 19, 20 gekoppelt. Die Speiseschaltungen 19, 20 stellen jeweils ein Signal S₁, S₂ bereit, die Empfangssignale sind. Die empfangenen Signale S₁, S2 werden mithilfe jeweils eines rauscharmen Verstärkers 21, 22 (Low Noise Amplifier) verstärkt, mithilfe jeweils eines Mischers 23, 24 herabgemischt, mithilfe jeweils eines Tiefpass-Filters 25, 26 tiefpass-gefiltert und mittels jeweils eines Analog-Digital-Wandlers 27, 28 analog-digital-gewandelt. Zum Herabmischen der empfangenen Signale S₁, S₂ wird das Sendesignal S₀ verwendet; das Sendesignal S₀ wird an die Mischer 23, 24 geführt, nämlich beispielsweise mithilfe eines Richtkopplers. Die empfangenen digitalen Signale S₁, S₂ werden dann mithilfe der Steuereinrichtung 5 verarbeitet. Aus den Signalen 5₁, S₂ bestimmt die Steuereinrichtung 5 die Entfernung R₁, R₂, die relative Geschwindigkeit des Objekts 10, wie auch den Zielwinkel α₁, α₂. Vorliegend richtet sich das Interesse insbesondere auf die Bestimmung des Zielwinkels α₁, α₂.

Bezugnehmend auf Fig. 3 wird die Erfassung eines Zielwinkels α durch ein einzelnes Radargerät 3, 4 näher erläutert. Die Steuereinrichtung 5 bestimmt den Zielwinkel α abhängig von einer Phasendifferenz zwischen den Phasen der empfangenen Signale S₁, S2. Dies beruht auf der Tatsache, dass eine auf das Radargerät 3, 4 einfallende elektromagnetische Welle unterschiedliche Ausbreitungswege zu den Empfangsantenneneinheiten 17, 18 durchläuft. Fig. 3 zeigt die zwei Empfangsantenneneinheiten 17, 18 des Radargeräts 3, 4 sowie eine Einfallsrichtung 29 einer einfallenden elektromagnetischen Welle. Der Zielwinkel α ist hier der Einfallswinkel der elektromagnetischen Welle, das heißt die Referenzlinie 11 verläuft parallel zu der Hauptstrahlrichtung der Empfangsantenneneinheiten 17, 18. Wie aus Fig. 3 hervorgeht, erreicht die Welle zunächst die zweite Empfangsantenneneinheit 18, bevor sie bei der ersten Empfangsantenneneinheit 17 ankommt. Die Differenz zwischen den Ausbreitungswegen beträgt d. Um Mehrdeutigkeiten bei der Erfassung der Phasendifferenz zu vermeiden, ist ein Abstand r zwischen den beiden Empfangsantenneneinheiten 17, 18 kleiner als die Wellenlänge der elektromagnetischen Welle.

Also kann die Steuereinrichtung 5 die Phasendifferenz zwischen den Phasen der empfangenen Signale S₁, S₂ erfassen. Zu diesem Zwecke ist in der Steuereinrichtung 5 eine Zielwinkel-Parameter-Kennlinie abgelegt, welche die Abhängigkeit der Phasendifferenz von dem Zielwinkel α wiedergibt. Es können für die beiden Radargeräte 3, 4 separate Zielwinkel-Parameter-Kennlinien in der Steuereinrichtung 5 abgelegt sein. Der Einfachheit halber wird nachfolgend nur eine einzelne Zielwinkel-Parameter-Kennlinie für ein Radargerät 3, 4 betrachtet.

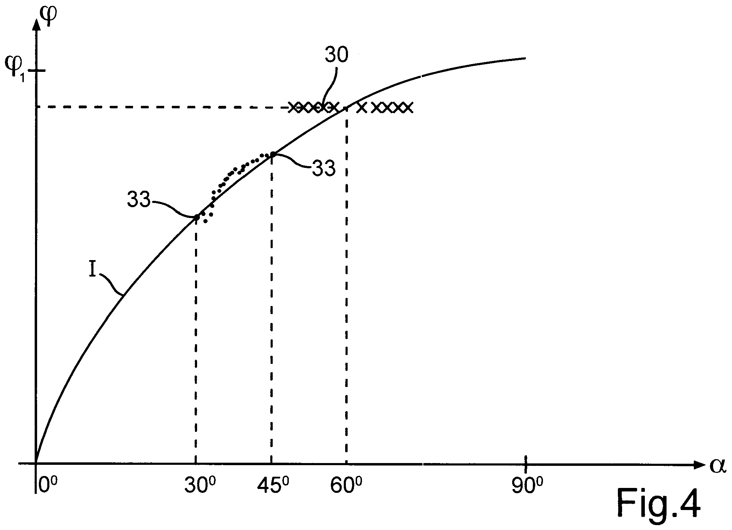

Eine solche beispielhafte Kennlinie I ist in Fig. 4 abgebildet. Auf der Y-Achse ist eine Phasendifferenz ϕ zwischen den Phasen der empfangenen Signale S₁, S₂ aufgetragen. Auf der X-Achse ist der Zielwinkel α aufgetragen. Wie aus Fig. 4 hervorgeht, weist die Zielwinkel-Parameter-Kennlinie I die Form einer Sinus-Funktion auf. In Fig. 4 ist lediglich ein Wertebereich des Zielwinkels α von 0° bis 90°, also nur ein Viertel einer gesamten Periode der Sinus-Funktion dargestellt. Es gilt die Beziehung, dass je größer der Zielwinkel α ist, desto größer die Phasendifferenz ϕ ist.

Die Radargeräte 3, 4 sind im Ausführungsbeispiel hinter dem Stoßfänger des Kraftfahrzeugs 1 angeordnet. Einbautoleranzen, hochfrequente Eigenschaften und die Form des Stoßfängers verändern dabei die Richtcharakteristik der Empfangsantenneneinheiten 17, 18, wie auch der Sendeantenneneinheit 13. Dies verfälscht die in Fig. 4 abgebildete Zielwinkel-Parameter-Kennlinie I. Außerdem kann sich diese Kennlinie I über die Lebensdauer des Kraftfahrzeugs 1 verändern. Dies geschieht zum Beispiel durch Deformation des Stoßfängers, Ablagerung von Schmutz oder Alterung der Bauteile. Dieser Problematik begegnet die Steuereinrichtung 5, indem sie die Zielwinkel-Parameter-Kennlinie I korrigiert bzw. kalibriert.

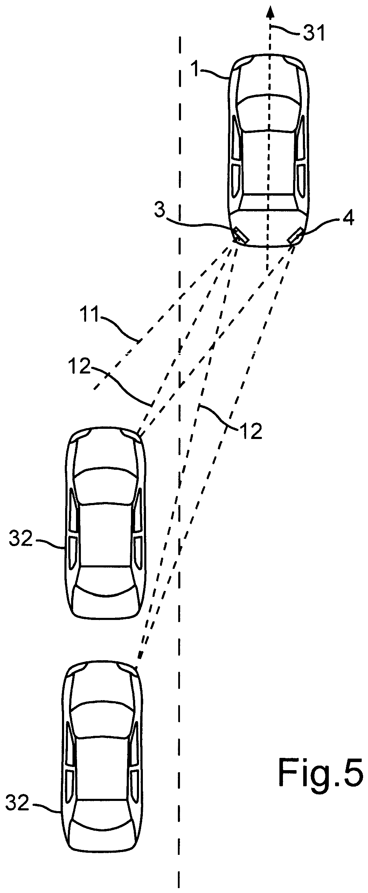

Nachfolgend wird ein Verfahren gemäß einer Ausführungsform der Erfindung näher erläutert, nämlich bezugnehmend auf die Fig. 4 und 5.

Wie bereits ausgeführt, erfasst die Steuereinrichtung 5 die Entfernungen R₁, R₂ eines Objekts 10 zu dem jeweiligen Radargerät 3, 4. Befindet sich ein Objekt 10 in dem Überlappungsbereich 9, so ist es möglich, den Zielwinkel α zu berechnen, nämlich nach dem Trilaterationsverfahren abhängig von der Entfernung R₁ des Objekts 10 zu dem ersten Radargerät 3 sowie von der Entfernung R₂ desselben Objekts 10 zu dem zweiten Radargerät 4. Misst die Steuereinrichtung 5 eine Phasendifferenz von ϕ₁, so ergibt sich ein Zielwinkel α von etwa 60° (Fig. 4). Gleichzeitig berechnet die Steuereinrichtung 5 den Zielwinkel α nach dem Trilaterationsverfahren abhängig von der Entfernung R₁, R₂ des Objekts 10 zum ersten Radargerät 3 sowie zum zweiten Radargerät 4. Dieser berechnete Zielwinkel α stimmt mit dem Wert des Zielwinkels α in der Zielwinkel-Parameter-Kennlinie I nicht überein, wie dies in Fig. 4 mit 30 bezeichnet ist. Bei dem Trilaterationsverfahren kommt es auf eine sehr genaue Entfernungsmessung an. Je kleiner der Abstand zwischen den Radargeräten 3, 4 ist, desto kleiner ist der Unterschied der Entfernung in Abhängigkeit von dem Zielwinkel α und desto genauer muss die einzelne Messung der Entfernung R₁, R₂ vorgenommen werden. Sind die Radargeräte 3, 4 beispielsweise 1,8 m beabstandet zueinander angeordnet, ergibt ein relativ kleiner Entfernungsmessfehler einen relativ großen Winkelfehler. Aus diesem Grund ist das Trilaterationsverfahren alleine nicht ausreichend, um den Zielwinkel α genau bestimmen zu können. Allerdings ist der Entfernungsmessfehler und somit der Fehler bei der Berechnung des Zielwinkels α nach dem Trilaterationsverfahren ein zufälliger Fehler und kein systematischer Fehler, wie dies bei der Phasen-Monopuls-Messung der Fall ist. Der Fehler bei dem Trilaterationsverfahren kann näherungsweise als mittelwertfrei angesehen werden. Mit anderen Worten sind die nach dem Trilaterationsverfahren berechneten Werte für den Zielwinkel α erwartungstreu.

Zu einem bestimmten Wert des Zielwinkels α in der Zielwinkel-Parameter-Kennlinie I werden somit eine Vielzahl von nach dem Trilaterationsverfahren berechneten Werten aufgesammelt. Dies ist in Fig. 4 für den Zielwinkel α von 60° schematisch dargestellt. Es wird jeweils eine Differenz aus dem Wert des Zielwinkels α in der Zielwinkel-Parameter-Kennlinie I - in dem Fall 60°- und den nach dem Trilaterationsverfahren berechneten Werten als Korrekturwert berechnet. Dieser Korrekturwert kann als eine Schätzung der Abweichung der Zielwinkel-Parameter-Kennlinie I angesehen werden. Wie bereits ausgeführt, sind die nach dem Trilaterationsverfahren berechneten Werte stark verrauscht, so dass auch die Korrekturwerte entsprechend verrauscht sind. Aus diesem Grund werden die Korrekturwerte gemittelt, und der Wert des Zielwinkels α in der Zielwinkel-Parameter-Kennlinie I wird um diesen Mittelwert korrigiert.

Es sind nun zwei unterschiedliche Vorgehensweisen bei der Mittelung der Korrekturwerte vorgesehen. Zum einen können zunächst eine Vielzahl, beispielsweise tausend, Korrekturwerte zu jedem Punkt in der Zielwinkel-Parameter-Kennlinie I bzw. zu jedem Zielwinkelwert in der Kennlinie I aufgesammelt werden. Liegen alle Korrekturwerte vor, so werden sie gemittelt, und der entsprechende Zielwinkelwert in der Kennlinie I wird um den Mittelwert korrigiert. Der Vorgang des Korrigierens alleine kann sogar bei einem abgestellten Kraftfahrzeug 1 bewirkt werden. Wichtig ist jedoch, dass die einzelnen Korrekturwerte oder zumindest die zugrunde liegenden Messwerte für die Entfernung R₁, R₂ während der Fahrt gewonnen und gespeichert werden. Auf diesem Wege wird nämlich erreicht, dass die Korrekturwerte tatsächlich als mittelwertfrei angesehen werden können und die Kennlinie I präzise korrigiert werden kann.

Zum anderen kann ein rekursiver Filter in der Steuereinrichtung 5 eingesetzt werden. Ein solcher Filter berechnet dann aus den Korrekturwerten ein gleitendes Mittel. In diesem Fall wird die ursprünglich als Referenz abgelegte Zielwinkel-Parameter-Kennlinie I kontinuierlich korrigiert; der entsprechende Zielwinkelwert in der Kennlinie I wird um den jeweils aktuellen Mittelwert des gleitenden Mittels korrigiert.

Also wird der entsprechende Zielwinkelwert auf der Kennlinie I um den berechneten Mittelwert aus den Korrekturwerten korrigiert. Es kann dabei vorgesehen sein, dass der Zielwinkelwert in der Kennlinie I bei jeglichem Mittelwert, nämlich selbst bei einem sehr geringen Mittelwert korrigiert wird. Dann wird jede, selbst eine geringe Abweichung der Zielwinkel-Parameter-Kennlinie I korrigiert. Um jedoch den Rechenaufwand zu minimieren, kann ein Toleranzinterwall für den berechneten Mittelwert definiert werden. Liegt der berechnete Mittelwert innerhalb dieses Toleranzintervalls, so wird der Zielwinkelwert in der Kennlinie I nicht korrigiert. Erst dann, wenn der Mittelwert das Toleranzintervall verlässt, wird die Korrektur des Zielwinkelwertes in der Zielwinkel-Parameter-Kennlinie durchgeführt. Ein solches Toleranzintervall kann zum Beispiel ein Winkelbereich von -0,5° bis +0,5° sein.

Das Aufsammeln von nach dem Trilaterationsverfahren berechneten Zielwinkelwerten wird nun bezugnehmend auf eine in Fig. 5 gezeigte Verkehrssituation auf einer Autobahn näher erläutert. Das Kraftfahrzeug 1, welches die Radargeräte 3, 4 aufweist, fährt auf der rechten Spur in einer mit 31 bezeichneten Fahrtrichtung. Ein weiteres Kraftfahrzeug 32 fährt auf der linken Spur mit einer Geschwindigkeit größer als die des Kraftfahrzeugs 1. In Fig. 5 ist das weitere Kraftfahrzeug 32 zu zwei unterschiedlichen Zeitpunkten in zwei unterschiedlichen Positionen, also in zwei unterschiedlichen Abständen zum Kraftfahrzeug 1 dargestellt. Nun sollen Korrekturwerte für die Zielwinkel-Parameter-Kennlinie I des ersten Radargeräts 3 aufgesammelt werden, nämlich mithilfe des Trilaterationsverfahrens. In einem Zeitintervall zwischen den Zeitpunkten, zu denen sich das weitere Kraftfahrzeug 32 in den in Fig. 5 dargestellten Positionen befindet, werden eine Vielzahl von Werten für den Zielwinkel α nach dem Trilaterationsverfahren berechnet. Die beiden Positionen des weiteren Kraftfahrzeugs 32 entsprechen in der Zielwinkel-Parameter-Kennlinie I gemäß Fig. 4 einem Zielwinkel von etwa 45° respektive 30°. Diese Punkte sind in der Zielwinkel-Parameter-Kennlinie I in Fig. 4 mit 33 bezeichnet. Während der Zeit, in welcher das weitere Kraftfahrzeug 32 sich dem Kraftfahrzeug 1 - wie in Fig. 5 dargestellt - nähert, wird der Zielwinkel α nach dem Trilaterationsverfahren berechnet, nämlich zu jedem Punkt in der Zielwinkel-Parameter-Kennlinie I zwischen den Punkten 33. Während dieser Zeit können zum Beispiel hundert Werte für den Zielwinkel nach dem Trilaterationsverfahren berechnet werden; jeder nach dem Trilaterationsverfahren berechnete Wert für den Zielwinkel wird jeweils einem Wert des Zielwinkels α in der Zielwinkel-Parameter-Kennlinie I zugeordnet. Dies ist in Fig. 4 zwischen den Punkten 33 schematisch angedeutet. Um eine Vielzahl von nach dem Trilaterationsverfahren berechneten Werten einem einzelnen Wert des Zielwinkels α in der Zielwinkel-Parameter-Kennlinie I zuordnen zu können, sind also eine Vielzahl von Objekten erforderlich.

Insgesamt wird eine Fahrerassistenzeinrichtung 2 bereitgestellt, mit welcher eine präzise Bestimmung des Zielwinkels α gewährleistet ist. Die in der Steuereinrichtung 5 abgelegte Zielwinkel-Parameter-Kennlinie I wird nämlich abhängig von nach dem Trilaterationsverfahren gewonnenen Werten für den Zielwinkel α kalibriert. Dabei wird die Tatsache zunutze gemacht, dass die Winkelmessung durch die Trilateration eine hohe Varianz bzw. hohes Messrauschen aufweist, jedoch erwartungstreu ist. Demgegenüber hat die Winkelmessung gemäß dem Phasen-Monopols-Verfahren eine geringe Varianz, weist jedoch systematische Fehler auf, nämlich insbesondere aufgrund eines Einbauwinkels und der Verzerrung der Zielwinkel-Parameter-Kennlinie I durch den Stoßfänger. Man kann also die Differenz zwischen dem Zielwinkel gemäß der Zielwinkel-Parameter-Kennlinie I und dem nach dem Trilaterationsverfahren berechneten Zielwinkel als eine Schätzung der Abweichung des Zielwinkels in der Zielwinkel-Parameter-Kennlinie I ansehen. Da diese Schätzung aufgrund von hohen Entfernungsmessfehlern stark verrauscht ist, kann durch eine Mittelung der Schätzwerte eine präzise Schätzung erzielt werden. Auf diesem Wege gelingt es, eine präzise Zielwinkel-Parameter-Kennlinie I zu bekommen.

## Patentansprüche

1. Fahrerassistenzeinrichtung (2) zum Bestimmen eines Zielwinkels (α) eines einrichtungsexternen Objektes (10, 32), wobei der Zielwinkel (α) ein Winkel zwischen einer Referenzlinie (11), die durch ein Radargerät (3) der Fahrerassistenzeinrichtung (2) verläuft, und einer Verbindungslinie (12), die durch das Radargerät (3) und das Objekt (10, 32) verläuft, ist, mit
- dem Radargerät (3) mit zumindest zwei Empfangsantenneneinheiten (17, 18) jeweils zum Empfangen von Signalen (S₁, S₂),
- einer Steuereinrichtung (5), die dazu ausgelegt ist, abhängig von einem auf die empfangenen Signale (S₁, S₂) bezogenen Parameter (ϕ) einen Wert für den Zielwinkel (α) gemäß einer abgelegten Zielwinkel-Parameter-Kennlinie (I) und einen Wert für eine Entfernung (R₁) des Objektes (10, 32) von dem Radargerät (3) zu bestimmen, wobei der Parameter (ϕ) eine Phasendifferenz (ϕ) zwischen den Phasen der empfangenen Signalen (S₁, S₂) ist und die Zielwinkel-Parameter-Kennlinie (I) die Abhängigkeit der Phasendifferenz (ϕ) von dem Zielwinkel (α) wiedergibt, und
- einem zu dem Radargerät (3) beabstandet angeordneten Sensor (4) zum Messen einer Entfernung (R₂) des Objektes (10, 32) von selbigem Sensor (4),
**dadurch gekennzeichnet,**
**dass** die Steuereinrichtung (5) dazu ausgelegt ist, aus Messwerten der Entfernung (R₂) des Objektes (10, 32) von dem Sensor (4) und den Werten für die Entfernung (R₁) des Objektes (10, 32) von dem Radargerät (3) den Zielwinkel (α) nach einem Rechenverfahren zu berechnen und die abgelegte Zielwinkel-Parameter-Kennlinie (I) abhängig vom Ergebnis dieser Berechnung zu korrigieren,
**dass** einem bestimmten Wert des Zielwinkels (α) in der Zielwinkel-Parameter-Kennlinie (I) eine Vielzahl von aus einzelnen Messungen an unterschiedlichen Objekten resultierenden und nach dem Rechenverfahren berechneten Werten zugeordnet werden,
**dass** die Vielzahl der nach dem Rechenverfahren berechneten Werte gemittelt wird und dass der Wert des Zielwinkels (α) in der Zielwinkel-Parameter-Kennlinie abhängig von dem berechneten, gemittelten Wert korrigiert wird.

2. Fahrerassistenzeinrichtung (2) nach Anspruch 1, **dadurch gekennzeichnet, dass** das Rechenverfahren ein Trilaterationsverfahren ist.

3. Fahrerassistenzeinrichtung (2) nach einem der vorhergehenden Ansprüche, **dadurch gekennzeichnet, dass** die Steuereinrichtung (5) dazu ausgelegt ist, eine Differenz aus dem Wert des Zielwinkels (α) in der Zielwinkel-Parameter-Kennlinie (I) und dem berechneten, gemittelten Wert als Korrekturwert zu berechnen und den Wert des Zielwinkels (α) in der Zielwinkel-Parameter-Kennlinie (I) abhängig von diesem Korrekturwert zu korrigieren.

4. Fahrerassistenzeinrichtung (2) nach einem der vorhergehenden Ansprüche, **dadurch gekennzeichnet, dass** das Radargerät (3) dazu ausgebildet ist, eine frequenzmodulierte kontinuierliche elektromagnetische Welle (S₀) abzustrahlen.

5. Fahrerassistenzeinrichtung (2) nach einem der vorhergehenden Ansprüche, **dadurch gekennzeichnet, dass** der von dem Radargerät (3) separate Sensor (4) ebenfalls ein Radargerät, insbesondere ein gleiches Radargerät (3, 4), ist.

6. Fahrerassistenzeinrichtung (2) nach Anspruch 5, **dadurch gekennzeichnet, dass** auch für den separaten Sensor (4) eine separate Zielwinkel-Parameter-Kennlinie (I) in der Steuereinrichtung (5) abgelegt ist und die Steuereinrichtung (5) dazu ausgelegt ist, diese Zielwinkel-Parameter-Kennlinie (I) abhängig von dem nach dem Rechenverfahren berechneten Zielwinkel (α) zu korrigieren.

7. Kraftfahrzeug mit einer Fahrerassistenzeinrichtung (2) nach einem der vorhergehenden Ansprüche.

8. Verfahren zum Korrigieren einer in einer Steuereinrichtung (5) einer Fahrerassistenzeinrichtung (2) abgelegten Zielwinkel-Parameter-Kennlinie (I), welche die Abhängigkeit eines Zielwinkels (α) eines einrichtungsexternen Objektes (10, 32) und eines auf empfangene Signale (S₁, S₂) zumindest zwei Empfangsantenneneinheiten (17, 18) eines einrichtungsinternen Radargeräts (3) bezogenen Parameters (ϕ) wiedergibt, wobei der Zielwinkel (α) ein Winkel zwischen einer Referenzlinie (11), die durch das Radargerät (3) verläuft, und einer Verbindungslinie (12), die durch das Radargerät (3) und das Objekt (10, 32) verläuft, ist, und der Parameter (ϕ) eine Phasendifferenz (ϕ) zwischen den Phasen der empfangenen Signalen (S₁, S₂) ist und die Zielwinkel-Parameter-Kennlinie (I) die Abhängigkeit der Phasendifferenz (ϕ) von dem Zielwinkel (α) wiedergibt, **gekennzeichnet durch** folgende Schritte:
a) Messen einer Entfernung (R₁) des Objektes (10, 32) zu dem Radargerät (3),
b) Messen einer Entfernung (R₂) des Objektes (10, 32) zu einem beabstandet zu dem Radargerät (3) angeordneten Sensor (4),
c) Berechnen des Zielwinkels (α) aus den Messwerten gemäß den Schritten a) und b) nach einem Rechenverfahren und
d) Korrigieren der abgelegten Zielwinkel-Parameter-Kennlinie (I) abhängig von dem Ergebnis der Berechnung
wobei einem bestimmten Wert des Zielwinkels (α) in der Zielwinkel-Parameter-Kennlinie (I) eine Vielzahl von aus einzelnen Messungen an unterschiedlichen Objekten resultierenden und nach dem Rechenverfahren berechneten Werten zugeordnet werden, und die Vielzahl der nach dem Rechenverfahren berechneten Werte gemittelt wird und dass der Wert des Zielwinkels (α) in der Zielwinkel-Parameter-Kennlinie abhängig von dem berechneten, gemittelten Wert korrigiert wird.

## Claims

1. Driver assistance device (2) for determining a target angle (α) of an object (10, 32) outside the device, wherein the target angle (α) is an angle between a reference line (11), which runs through a radar device (3) of the driver assistance device (2), and a connecting line (12), which runs through the radar device (3) and the object (10, 32), having
- the radar device (3) with at least two receiving antenna units (17, 18) each for receiving signals (S₁, S₂),
- a control device (5) which is designed to determine a value for the target angle (α) on the basis of a parameter (ϕ) based on the received signals (S₁, S₂) according to a stored target angle/parameter characteristic curve (I) and to determine a value for a distance (R₁) between the object (10, 32) and the radar device (3), wherein the parameter (ϕ) is a phase difference (ϕ) between the phases of the received signals (S₁, S₂) and the target angle/parameter characteristic curve (I) represents the dependence of the phase difference (ϕ) on the target angle (α), and
- a sensor (4) which is arranged at a distance from the radar device (3) and is intended to measure a distance (R₂) between the object (10, 32) and said sensor (4),
**characterized**
**in that** the control device (5) is designed to calculate the target angle (α) from measured values of the distance (R₂) between the object (10, 32) and the sensor (4) and from the values for the distance (R₁) between the object (10, 32) and the radar device (3) according to a calculation method and to correct the stored target angle/parameter characteristic curve (I) on the basis of the result of this calculation,
**in that** a multiplicity of values resulting from individual measurements at different objects and calculated according to the calculation method are assigned to a particular value of the target angle (α) in the target angle/parameter characteristic curve (I),
**in that** the multiplicity of the values calculated according to the calculation method are averaged, and in that the value of the target angle (α) in the target angle/parameter characteristic curve is corrected on the basis of the calculated averaged value.

2. Driver assistance device (2) according to Claim 1, **characterized in that** the calculation method is a trilateration method.

3. Driver assistance device (2) according to one of the preceding claims, **characterized in that** the control device (5) is designed to calculate a difference from the value of the target angle (α) in the target angle/parameter characteristic curve (I) and the calculated averaged value as a correction value and to correct the value of the target angle (α) in the target angle/parameter characteristic curve (I) on the basis of this correction value.

4. Driver assistance device (2) according to one of the preceding claims, **characterized in that** the radar device (3) is designed to emit a frequency-modulated continuous electromagnetic wave (S₀).

5. Driver assistance device (2) according to one of the preceding claims, **characterized in that** the sensor (4) separate from the radar device (3) is likewise a radar device, in particular an identical radar device (3, 4).

6. Driver assistance device (2) according to Claim 5, **characterized in that** a separate target angle/parameter characteristic curve (I) is also stored in the control device (5) for the separate sensor (4), and the control device (5) is designed to correct this target angle/parameter characteristic curve (I) on the basis of the target angle (α) calculated according to the calculation method.

7. Motor vehicle having a driver assistance device (2) according to one of the preceding claims.

8. Method for correcting a target angle/parameter characteristic curve (I) which is stored in a control device (5) of a driver assistance device (2) and represents the dependence of a target angle (α) of an object (10, 32) outside the device and a parameter (ϕ) based on received signals (S₁, S₂) of at least two receiving antenna units (17, 18) of a radar device (3) inside the device, wherein the target angle (α) is an angle between a reference line (11), which runs through the radar device (3), and a connecting line (12), which runs through the radar device (3) and the object (10, 32), and the parameter (ϕ) is a phase difference (ϕ) between the phases of the received signals (S₁, S₂) and the target angle/parameter characteristic curve (I) represents the dependence of the phase difference (ϕ) on the target angle (α),
**characterized by** the following steps of:
a) measuring a distance (R₁) between the object (10, 32) and the radar device (3),
b) measuring a distance (R₂) between the object (10, 32) and a sensor (4) arranged at a distance from the radar device (3),
c) calculating the target angle (α) from the measured values according to steps a) and b) according to a calculation method, and
d) correcting the stored target angle/parameter characteristic curve (I) on the basis of the result calculation,
wherein a multiplicity of values resulting from individual measurements at different objects and calculated according to the calculation method are assigned to a particular value of the target angle (α) in the target angle/parameter characteristic curve (I), and the multiplicity of the values calculated according to the calculation method are averaged, and the value of the target angle (α) in the target angle/parameter characteristic curve (I) is corrected on the basis of the calculated averaged value.

## Revendications

1. Dispositif d'assistance au conducteur (2) destiné à déterminer un angle cible (α) d'un objet (10, 32) extérieur au dispositif, dans lequel l'angle cible (α) est un angle formé entre une ligne de référence (11) passant par un appareil radar (3) du dispositif d'assistance au conducteur (2) et une ligne de liaison (12) passant par l'appareil radar (3) et l'objet (10, 32), comportant
- l'appareil radar (3), qui comprend au moins deux unités d'antenne de réception (17, 18) chacune destinée à recevoir des signaux (S₁, S₂),
- un dispositif de commande (5) conçu pour déterminer, en fonction d'un paramètre (ϕ) lié aux signaux reçus (S₁, S₂), une valeur de l'angle cible (α) conformément à une courbe caractéristique du paramètre d'angle cible (I) stockée, et une valeur d'une distance (R₁) de l'objet (10, 32) par rapport à l'appareil radar (3), dans lequel le paramètre (ϕ) est une différence de phase (ϕ) entre les phases des signaux reçus (S₁, S₂) et la courbe caractéristique du paramètre d'angle cible (I) représente la dépendance de la différence de phase (ϕ) par rapport à l'angle cible (α), et
- un capteur (4) disposé de manière espacée de l'appareil radar (3), destiné à mesurer une distance (R₂) de l'objet (10, 32) par rapport au même capteur (4),
**caractérisé en ce que** le dispositif de commande (5) est conçu pour calculer l'angle cible (α) à partir de valeurs de mesure de la distance (R₂) de l'objet (10, 32) par rapport au capteur (4) et des valeurs de la distance (R₁) de l'objet (10, 32) par rapport à l'appareil radar (3) conformément à un procédé de calcul et pour corriger la courbe caractéristique du paramètre d'angle cible (I) stockée en fonction du résultat dudit calcul,
**en ce qu'**une pluralité de valeurs résultant de mesures individuelles effectuées sur différents objets et calculées par le procédé de calcul est associée à une valeur déterminée de l'angle cible (α) dans la courbe caractéristique du paramètre d'angle cible (I),
**en ce que** la pluralité des valeurs calculées conformément au procédé de calcul est moyennée et **en ce que** la valeur de l'angle cible (α) dans la courbe caractéristique du paramètre d'angle cible est corrigée en fonction de la valeur moyennée calculée.

2. Dispositif d'assistance au conducteur (2) selon la revendication 1, **caractérisé en ce que** le procédé de calcul est un procédé de trilatération.

3. Dispositif d'assistance au conducteur (2) selon l'une des revendications précédentes, **caractérisé en ce que** le dispositif de commande (5) est conçu pour calculer une différence à partir de la valeur de l'angle cible (α) dans la courbe caractéristique du paramètre d'angle cible (I) et de la valeur calculée en tant que valeur de correction et pour corriger la valeur de l'angle cible (α) dans la courbe caractéristique du paramètre d'angle cible (I) en fonction de ladite valeur de correction.

4. Dispositif d'assistance au conducteur (2) selon l'une des revendications précédentes, **caractérisé en ce que** l'appareil radar (3) est conçu pour émettre une onde électromagnétique continument modulée en fréquence (S₀).

5. Dispositif d'assistance au conducteur (2) selon l'une des revendications précédentes, **caractérisé en ce que** le capteur (4) séparé de l'appareil radar (3) est également un appareil radar, en particulier un appareil radar (3, 4) identique.

6. Dispositif d'assistance au conducteur (2) selon la revendication 5, **caractérisé en ce qu'**une courbe caractéristique du paramètre d'angle cible (I) distincte est également stockée dans le dispositif de commande (5) pour le capteur séparé (4), et **en ce que** le dispositif de commande (5) est conçu pour corriger ladite courbe caractéristique du paramètre d'angle cible (I) en fonction de l'angle cible (α) calculé par le procédé de calcul.

7. Véhicule automobile équipé d'un dispositif d'assistance au conducteur (2) selon l'une des revendications précédentes.

8. Procédé de correction d'une courbe caractéristique d'un paramètre d'angle cible (I) stockée dans un dispositif de commande (5) d'un dispositif d'assistance au conducteur (2) et qui représente la dépendance d'un angle cible (α) d'un objet (10, 32) extérieur au dispositif et d'un paramètre (ϕ) relatif aux signaux reçus (S₁, S₂) par au moins deux unités d'antennes de réception (17, 18) d'un appareil radar (3) intérieur au dispositif de commande, dans lequel l'angle cible (α) est un angle formé entre une ligne de référence (11) passant par l'appareil radar (3) et une ligne de liaison (12) passant par l'appareil radar (3) et l'objet (10, 32), et le paramètre (ϕ) est une différence de phase (ϕ) entre les phases des signaux reçus (S₁, S₂) et la courbe caractéristique du paramètre d'angle cible (I) représente la dépendance de la différence de phase (ϕ) par rapport à l'angle cible (α), **caractérisé par** les étapes consistant à :
a) mesurer une distance (R₁) de l'objet (10, 32) par rapport à l'appareil radar (3),
b) mesurer une distance (R₂) de l'objet (10, 32) par rapport à un capteur (4) disposé de manière espacée de l'appareil radar (3),
c) calculer l'angle cible (α) à partir des valeurs de mesure conformément aux étapes a) et b) selon un procédé de calcul et
d) corriger la courbe caractéristique du paramètre d'angle cible (I) stockée en fonction du résultat du calcul,
dans lequel une pluralité de valeurs résultant de mesures individuelles effectuées sur différents objets et calculées par le procédé de calcul est associée à une valeur déterminée de l'angle cible (α) dans la courbe caractéristique du paramètre d'angle cible (I), et la pluralité des valeurs calculées conformément au procédé de calcul est moyennée, et en ce que la valeur de l'angle cible (α) dans la courbe caractéristique du paramètre d'angle cible est corrigée en fonction de la valeur moyennée calculée.
